# EUROPEAN PATENT APPLICATION

(11) **EP 2 420 349 A2**
(43) Date of publication of application: **22.02.2012**
(21) Application number: 11176704.2
(22) Date of filing: 05.08.2011
(51) Int. Cl.: B23Q 3/18, F16H 25/18, B23Q 3/10

(54) **An adjustable locator for a workpiece fixture**

(30) Priority: 16.08.2010 GB 1013687
(71) Applicant: Rolls-Royce plc, London SW1E 6AT (GB)
(72) Inventor: Mather, Andrew Victor, Hope Valley, Derbyshire S32 3HE (GB)
(74) Representative: Tindall, Adam

(57) **Abstract**

An adjustable locator comprises a locator element 22 for contact with a workpiece 24 supported on a fixture 2. The locator comprises a support element 28 in which a ramp element 36 is slidable. The ramp element 36 has a ramp surface 40 which is contacted by a plunger 38 which carries the locator element 32. Displacement of the ramp element 36 causes displacement of the plunger 38 to adjust the position of the locator element 22 with respect to the support element 28. A ratchet mechanism 48, 50 permits displacement of the ramp element 36 in one direction, but prevents such movement in the opposite direction.

The adjustable locator can be used in a workpiece fixture to achieve an optimum orientation of a workpiece prior to machining.

## Description

This invention relates to an adjustable locator for a workpiece fixture and is particularly, although not exclusively, concerned with a locator for a workpiece fixture on which the workpiece, such as a casting, can be supported in an optimum orientation for a processing step, such as a machining operation.

Fixtures are commonly used in manufacturing operations, particularly automated manufacturing operations, and serve to locate a workpiece correctly in a given orientation with respect to a cutting tool or other components to be used in the manufacturing operation.

A fixture typically comprises a main body provided with at least one locator which contacts the workpiece to establish and maintain the position of the workpiece on the fixture. The fixture also typically comprises means for securing the main body to the bed of a machining centre, and clamping means for retaining the workpiece on the fixture.

Fixture locators may be adjustable. For example, it is known to employ fine-threaded screws as used in micrometer heads. Rotation of a thimble causes advancement or retraction of a locator element of the locator by way of the fine-threaded screw. Such devices are awkward to operate when installed on a fixture, since the thimble may not be easily accessible.

According to a first aspect of the present invention there is provided an adjustable locator for a workpiece fixture, the locator comprising a support element, a locator element which defines a datum point for contact with a workpiece, and an adjustment mechanism for adjusting the position of the locator element with respect to the support element, the adjustment mechanism comprising a ramp element, which is displaceable with respect to the support element and is lockable against displacement in at least one direction, and a plunger which engages the ramp element at a ramp surface whereby displacement of the ramp element is transmitted to the locator element by the plunger.

The ramp element and the plunger may cooperate with each other in such a manner that displacement of the ramp element causes displacement of the plunger in a direction transverse to the direction of displacement of the ramp element. The mechanical advantage between the ramp element and the plunger may be greater than one, for example it may be greater than five.

The ramp element may be lockable with respect to the support body by a ratchet mechanism which may comprise ratchet teeth on the ramp element and a pawl on the support body.

The ramp surface may be provided on the ramp element. The plunger may be resiliently biased into contact with the ramp surface.

The locator element may be provided on the plunger. In an alternative embodiment, the locator element may be provided on a locator element carrier which is coupled to the plunger for displacement in a direction transverse to the displacement direction of the plunger.

The support element may comprise a laminar component. The support element may have guide apertures within which the ramp element and the plunger are displaceable, and the ramp element and the plunger may also comprise laminar components. The support element may be disposed between side plates which retain the plunger and the ramp element within the guide apertures. At least one of the side plates may comprise a wall component of a workpiece fixture.

The present invention also provides a workpiece fixture including an adjustable locator as defined above.

According to a second aspect of the present invention, there is provided a method of orienting a workpiece on a fixture, the method comprising:
i) generating a computer model of a nominal workpiece shape and orientation;
ii) supporting the workpiece on the fixture by means of a plurality of locators, at least one of which is adjustable;
iii) scanning the supported workpiece and generating a computer model of the supported workpiece shape and orientation;
iv) comparing the computer model of the supported workpiece shape and orientation with the computer model of the nominal workpiece shape and orientation;
v) determining a required displacement of the supported workpiece to achieve a best fit between the supported workpiece shape and orientation and the nominal workpiece shape and orientation; and
vi) adjusting the adjustable locator, or at least one of the adjustable locators, to achieve the required displacement of the supported workpiece.

The workpiece may comprise a metallic casting.

The present invention also provides a machining operation, which may be a laser machining operation, which comprises orienting a workpiece in a method in accordance with the second aspect of the invention, and subsequently performing a machining step on the supported workpiece.

The or each adjustable locator may be an adjustable locator in accordance with the first aspect of the present invention.

For a better understanding of the present invention, and to show how it may be carried into effect, reference will now be made, by way of example, to the accompanying drawings, in which:
Figure 1 shows a fixture on which a workpiece is supported;
Figure 2 is an external side view of an adjustable locator of the fixture of Figure 1;
Figure 3 is an internal view of the adjustable locator of Figure 2;
Figure 4 corresponds to Figure 3 but shows an alternative adjustable locator, and
Figure 5 is an edge view of the adjustable locator of Figure 4.

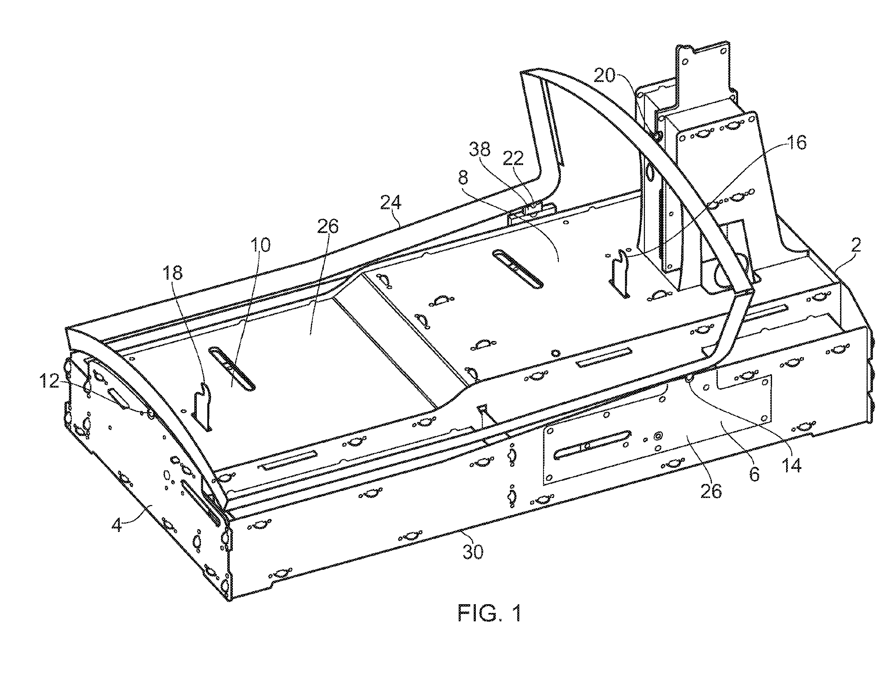

The fixture shown in Figure 1 comprises a main body 2 provided with adjustable locators 4, 6, 8, 10 provided with respective locator elements 12, 14, 16, 18. Further locators are provided on the body 2, for example as indicated by their respective locator elements 20, 22.

A workpiece 24 (represented only partially in Figure 1 for clarity) is supported on the fixture by the locator elements 12, 14, 16, 18, 20, 22.

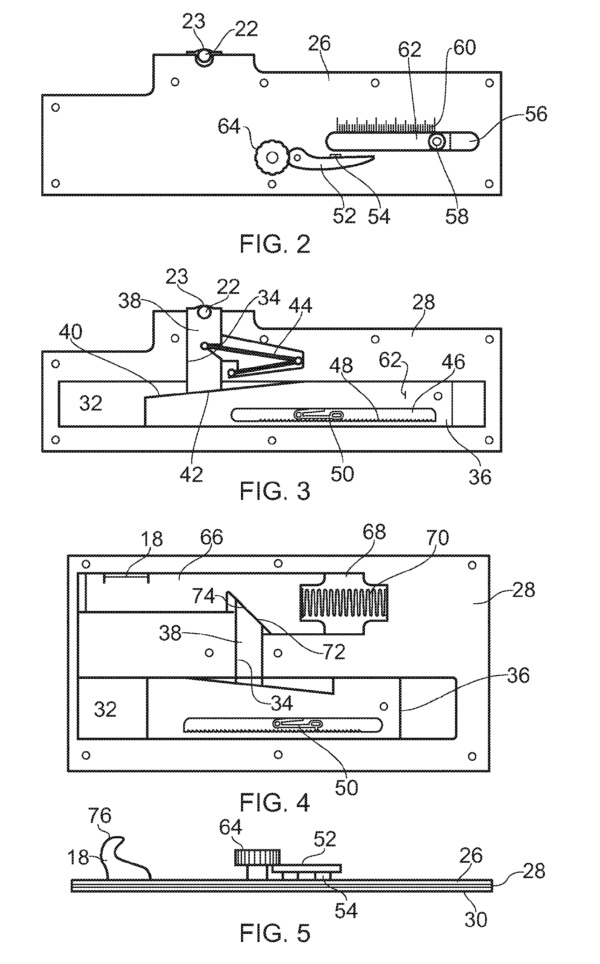

Figures 2 and 3 show a locator similar to the locator 6 in Figure 1. It is, in fact, a mirror image of the locator 6, and consequently can be regarded as the locator having the locator element 22 in Figure 1.

Figure 2 shows an outer side plate 26 of the locator, and so is visible from the outside of the fixture. Figure 3 shows a support element 28 of the locator which is sandwiched between the outer side plate 26 and an inner side plate (not shown) which may be a separate component having the same outside profile as the outer side plate 26, or may be constituted by a wall 30 of the main body 4. The support element 28, like the outer side plate 26 and the inner side plate 30 (if a separate component from the wall of the fixture), is a laminar component and may be formed, for example, by laser cutting from a metal sheet.

The support element 26 has two guide apertures 32, 34 which accommodate respectively a ramp element 36 and a plunger 38, both of which are laser cut sheet metal components. The ramp element 36 and the plunger 38 are constrained for translational movement between parallel edges of the apertures 32, 34, and are retained within the apertures 32, 34 by the outer side plate 26 and the inner side plate 30. In the embodiment shown the locator element 22 is provided in the form of a ball defining a datum point 23 at its top (as viewed in Figure 3), to engage a horizontal surface of the workpiece 24 in the cases of the locator elements 12 14 and 22. It will be appreciated, however, that the datum point may engage surfaces at other orientations. For example, the locator element 20 contacts a vertical surface of the workpiece 24.

The ramp element 36 has a ramp surface 40 which cooperates with a correspondingly oblique end surface 42 of the plunger 38. A spring 44 acts between the support element 28 and the plunger 38 to bias the plunger 38 towards the ramp surface 40, ie downwardly as viewed in Figure 3. Consequently, displacement of the ramp element 36 along the aperture 32 causes displacement of the plunger 38 in a direction transverse to that of the ramp element 36, so adjusting the position of the locator element 22 with respect to the support element 28. As shown in Figure 3, the ramp surface 40 has a relatively shallow inclination with respect to the longitudinal direction of the aperture 38 (ie the direction of displacement of the ramp element 36). By way of example, the angle of inclination of the ramp surface 40 may be such as to give a mechanical advantage between the ramp element 36 and the plunger 38 of approximately 10. The mechanical advantage is defined as the ratio of the displacement of the ramp element 36 to that of the plunger 38. The mechanical advantage must be greater than one if the movement of the plunger 38 is to be less than that of the ramp element 36 and is preferably greater than five if the locator element 22 is to be displaceable in small steps.

The ramp element 36 has a slot 46, one edge of which is formed with ratchet teeth 48. A sprung pawl 50 is pivotably supported by the outer and inner side plates 26, 30. The pawl 50 has a pawl tooth engaging the ratchet teeth 48 in a manner which provides a ratchet mechanism enabling displacement of the ramp element 36 to the left, as viewed in Figure 3, so as to raise the locator element 22, while preventing reverse movement while the pawl 50 engages the ratchet teeth 48. The ratchet mechanism 48, 50 thus serves to lock the ramp element 36 against displacement in one direction (to the right in Figure 3) while permitting such displacement in the opposite direction.

Referring to Figure 2, a pawl release lever 52 is pivotably supported on the outer side plate 26, and has a projection 54 which projects through an opening in the outer side wall 26 to engage the pawl 50. The release lever 52 can thus be operated by hand from outside the adjustable locator to release the pawl 50 from the ratchet teeth 48, permitting displacement of the ramp element 36 to the right as shown in Figure 3, so as to lower the locator element 22. The outer side plate 26 is provided with a slot 56 through which projects a sliding adjustment knob 58 carried by the ramp element 36. The knob 58 can be used to displace the ramp element 36 in either direction when the pawl 50 is released by means of the pawl release lever 52, or towards the left, as seen in Figure 3, when the pawl is engaged. A scale 60 is provided on the outer side panel 26 along the slot 56, and a calibration point 62 is marked on the ramp element 36. Positioning of the calibration point 62 against the zero position on the scale 60 (midway between the ends of the scale 60) corresponds to a nominal initial position of the locator element 22.

A locking thumb wheel 64 cooperates with the outer side plate 26 and can be turned to engage the ramp element 36 to lock the ramp element 36 and consequently the locator element 22 in a set position.

Figures 4 and 5 show a variant of the locator corresponding to the locator 10 of Figure 1. As with the locator shown in Figures 2 and 3, the locator 10 comprises three laminar components 26, 28 and 30, of which the components 26 and 30 comprise outer and inner side plates respectively, and the component 28 comprises a support element, shown in Figure 4. As with the locator of Figures 2 and 3, the locator of Figures 4 and 5 comprises a ramp element 36 and a plunger 38 guided in respective apertures 32, 34 in the support element 28. The position of the ramp element 36 can be adjusted and locked in the same manner as that of the locator of Figures 2 and 3, and so will not be described in detail again.

In the locator of Figures 4 and 5, the locator element 18 is in the form of a hooked tip providing a datum point 76 positioned, in the embodiment of fixture shown in Figure 1, to engage a vertical, or at least upwardly extending, surface of the workpiece 24. The locator element 18 is carried by a locator element carrier 66 which is slidable in a further aperture 68 in the support element 28. Like the support element 28, the outer and inner support plates 26, 30, the ramp element 36 and the plunger 38, the carrier 66, including the locator element 18, is laser cut from sheet metal material, the locator element 18 then being bent out of the plane of the rest of the carrier 66 to stand upright in the fixture as shown in Figure 1.

A spring 70 acts between the support element 28 and the carrier 66, the spring being thin in the direction perpendicular to the plane of Figure 4, so that it can be accommodated in the aperture 68 between the outer and inner side plates 26, 30.

In operation of the locator shown in Figures 4 and 5, displacement of the ramp element 36 causes corresponding transverse displacement of the plunger 38 with a mechanical advantage of 10. The plunger 38 engages the carrier 66 at cooperating ramp surfaces 72, 74, which are inclined at 45° to the direction of displacement of the plunger 38. Consequently, displacement of the plunger 38 by the ramp element 36 is accompanied by displacement of the carrier 66 in a direction perpendicular to that of the plunger 38, ie parallel to, and in the same direction, as that of the ramp element 36.

The fixture shown in Figure 1 may be used to support an alloy workpiece in an as-cast state (or with only minor modifications after casting) for a subsequent machining operation. As an initial step, a computer model is generated of the nominal shape of the casting in a nominal orientation on the fixture. In practice, shrinkage and distortion which occur during the casting process mean that the finished casting does not conform exactly to the nominal shape. In order to compensate for the inaccuracies in the finished casting, the positioning of the casting on the fixture is adjusted.

The workpiece is initially placed on the fixture with the locator elements 12 to 22 in nominal initial positions. These nominal initial positions may correspond to the "zero" position on the scale 60, but they may be varied from this position in the light of experience with the particular casting concerned. The ramp element can be displaced to the required position by releasing the pawl 50 by means of the release lever 52 and sliding the ramp element 36 in the required direction using the knob 58.

The three locator elements 12, 14, 22 will support the weight of the workpiece 24, while the locator element 20 will position the workpiece in the longitudinal direction of the fixture and the locator elements 16 and 18 will determine its angular position about the lengthwise direction.

The casting is then scanned by any suitable process, and the scan is used to generate a computer model of the actual shape and orientation of the casting as supported on the fixture. The computer model of the supported casting is then compared with the computer model of the nominal casting and calculations are made to determine adjustments to the locating elements 12 to 22 which will result in the supported casting being a "best fit" with the computer model representing the nominal casting.

The locating elements 12 to 22 are adjusted as required by reference to the scale 60. The appropriate ramp elements 36 are displaced to move the respective locator elements to the desired positions. It will be appreciated that, with a mechanical advantage of 10, a displacement of 1 mm of the ramp element 36 will produce a displacement of 0.1 mm of the locator element 12 to 22. Once the "best fit" position of the workpiece has been achieved, the machining operation on the casting can proceed.

The pitch of the ratchet teeth 48 and the slope of the ramp surface 40 may, for example, be selected in conjunction with the maximum travel of the ramp element 36 so as to enable adjustment of the datum point defined by each locator element 12 to 22 over the range of plus or minus 3mm in steps of 0.1 mm. It will, of course, be appreciated that the characteristics of each locator can be altered by varying the pitch of the ratchet teeth 48 and/or the angle of inclination of the ramp surface 40.

It will be appreciated that the wall 30 of the main body 4 of the fixture may serve as either of the outer and inner side plates 26, 30, or the support element 28 of each of the locators. The three components 26, 28, 30 are secured together by bolts or screws passing through the stacked components and securing the assembly to the fixture wall. Alternatively, each locator may be a self-contained unit which is separately secured to the main body 2 of the fixture. However, integrating the locators with the main body 2 of the fixture has the advantage that the load path from the locator elements to the main body 2 is simplified, with the result that each locator is able to bear substantial loading from the workpiece while it is supported during the machining operation. Locators as described above are thus robust and compact, and can form an integral part of a fixture, rather than being a separate unit to be attached to the fixture.

## Claims

1. An adjustable locator (4, 6, 8, 10) for a workpiece fixture, the locator (4, 6, 8, 10) comprising a support element (28), a locator element (22) which defines a datum point (23) for contact with a workpiece (24), and an adjustment mechanism for adjusting the position of the locator element (22) with respect to the support element (28), the adjustment mechanism comprising a ramp element (36), which is displaceable with respect to the support element (28) and is lockable against displacement in at least one direction, and a plunger (38) which engages the ramp element (36) at a ramp surface (40) whereby displacement of the ramp element (36) is transmitted to the locator element (22) by the plunger (38).

2. An adjustable locator as claimed in claim 1, in which the ramp element (36) and the plunger (38) are configured so that displacement of the ramp element (36) causes displacement of the plunger (38) in a direction transverse to the direction of displacement of the ramp element (36).

3. An adjustable locator as claimed in claim 1 or 2, in which the mechanical advantage between the ramp element (36) and the plunger (38) is greater than one and may be greater than five.

4. An adjustable locator as claimed in any one of the preceding claims, in which the ramp element (36) is lockable with respect to the support element (28) by a ratchet mechanism, which may comprise ratchet teeth on the ramp element (36), and a pawl (50) on the support element (28).

5. An adjustable locator as claimed in any one of the preceding claims, in which the ramp surface (40) is provided on the ramp element (36), and the plunger may be resiliently biased into contact with the ramp surface (40).

6. An adjustable locator as claimed in any one of the preceding claims, in which the locator element (22) is mounted on the plunger (38).

7. An adjustable locator as claimed in any one of claims 1 to 5, in which the locator element (22) is mounted on a locator element carrier (66) which is coupled to the plunger (38) for displacement in a direction transverse to the displacement direction of the plunger (38).

8. An adjustable locator as claimed in any one of the preceding claims, in which the support element (28) comprises a laminar component, and the ramp element (36) and the plunger (38) may comprise laminar components.

9. An adjustable locator as claimed in claim 9, in which the support element (28) is provided with guide apertures (32, 34) within which the ramp element (36) and the plunger (38) are displaceable.

10. An adjustable locator as claimed in claim 9, in which the support element (28) is disposed between side plates (26) which retain the plunger (38) and the ramp element (36) in the guide apertures (32, 34).

11. An adjustable locator as claimed in any one of claims 8 to 10, in which the support element (28) or at least one of the side plates (26) is a wall component of a workpiece fixture.

12. A workpiece fixture provided with an adjustable locator (4, 6, 8, 10) in accordance with any one of the preceding claims.

13. A method of orienting a workpiece on a fixture, the method comprising:
i) generating a computer model of a nominal workpiece (24) shape and orientation;
ii) supporting the workpiece (24) on the fixture by means of a plurality of locators (4, 6, 8, 10), at least one of which is adjustable;
iii) scanning the supported workpiece (24) and generating a computer model of the supported workpiece (24) shape and orientation;
iv) comparing the computer model of the supported workpiece (24) shape and orientation with the computer model of the nominal workpiece (24) shape and orientation;
v) determining a required displacement of the supported workpiece (24) to achieve a best fit between the supported workpiece (24) shape and orientation and the nominal workpiece (24) shape and orientation; and
vi) adjusting the adjustable locator (4, 6, 8, 10), or at least one of the adjustable locators (4, 6, 8, 10), to achieve the required displacement of the supported workpiece (24).

14. A machining operation on a workpiece, comprising orienting the workpiece (24) by a method in accordance with claim 13, and subsequently performing a machining step on the workpiece.

15. A method of orienting a workpiece or a machining operation as claimed in any one of claims 13 to 14, in which at least one of the adjustable locators (4, 6, 8, 10) is in accordance with any one of claims 1 to 11.
